# FASCICULE DE BREVET EUROPEEN

(11) **EP 2 524 294 B1**
(45) Date de publication et mention de la délivrance du brevet: **26.06.2013**
(21) Numéro de dépôt: 11811101.2
(22) Date de dépôt: 13.12.2011
(51) Int. Cl.: G06F 3/0488

(54) **PROCEDE DE SELECTION D'UN ELEMENT D'UNE INTERFACE UTILISATEUR ET DISPOSITIF METTANT EN OEUVRE UN TEL PROCEDE.**
VERFAHREN ZUR AUSWAHL EINES ELEMENTES EINER BENUTZERSCHNITTSTELLE UND VORRICHTUNG ZUR UMSETZUNG DES VERFAHRENS
METHOD FOR SELECTING AN ELEMENT OF A USER INTERFACE AND DEVICE IMPLEMENTING SUCH A METHOD

(30) Priorité: 07.04.2011 FR 1153043
(43) Date de publication de la demande: 21.11.2012
(73) Titulaire: Archos, 91430 Igny (FR)
(72) Inventeur: CROHAS, Henri, 91430 Igny (FR); MALLART, Raul, 75012 Paris (FR)
(74) Mandataire: Kingolo, Alain
(86) Numéro de dépôt international: PCT/FR2011/052964
(87) Numéro de publication internationale: WO 2012/136901

(56) Documents cités:
- EP-A2- 1 674 976
- WO-A1-2008/070815
- US-A1- 2006 022 955
- US-A1- 2007 198 950
- US-A1- 2010 333 018
- US-A1- 2011 025 718

## Description

### Domaine technique

La présente invention concerne un procédé de sélection d'éléments d'interface utilisateur. Elle concerne également un dispositif mettant en oeuvre un tel procédé.

Le domaine de l'invention est plus particulièrement mais de manière non limitative celui des ordinateurs comprenant une interface tactile.

### Etat de la technique antérieure

L'utilisation d'écrans tactiles est en plein essor dans les équipements portables. Ces équipements ont des tailles d'écran extrêmement variables de 2 pouces de diagonale à plus de 12 pouces. La résolution de ces écrans est de plus en plus fine et est maintenant comparable à celle des écrans d'ordinateurs classiques. Ces équipements reposent sur des interfaces graphiques avec lesquelles l'utilisateur va être en interaction, par exemple en utilisant ses doigts en lieu et place d'une souris pour pointer, cliquer, sélectionner les éléments de l'interface utilisateur.

Une particularité de ce mode d'opération est que la précision du pointage est faible car la surface de contact d'un doigt sur l'interface est relativement grande, de l'ordre de 1/2 cm². En général pour compenser ce manque de précision, les interfaces utilisateur sont conçues spécifiquement pour ces équipements. Ainsi les boutons sont de plus grandes dimensions que pour un ordinateur classique et plus espacés sur l'interface utilisateur.

Une fonction de ces appareils est de remplacer l'ordinateur classique pour des tâches de plus en plus nombreuses et notamment l'accès au web, l'écriture de messages (email), de textes, etc. On se trouve alors confronté à des situations où il faut supporter des applications conçues pour un ordinateur classique ou plus simplement pouvoir accéder à des sites web conçus pour l'ordinateur classique.

Dans ces deux cas se pose le problème de la précision du pointage de la souris.

On connaît différents modes de réalisation de procédé de sélection d'un élément d'une interface utilisateur ainsi que différents dispositifs mettant en oeuvre de tels modes.

On connaît la solution d'Apple^{®} implémentée dans l'iPhone^{®} pour les zones d'édition de texte où, pour positionner le curseur, après un appui long d'un doigt sur l'écran, la zone sous le doigt est reproduite zoomée au-dessus du doigt. L'utilisateur peut, en déplaçant son doigt positionner le curseur de façon précise. Il se pose alors le problème de l'accès en haut de l'écran qui est problématique car la loupe virtuelle sort de l'écran. Par ailleurs, ce procédé ne fonctionne qu'avec certaines applications. On ne peut, par exemple, pas pointer précisément un élément de site web qui n'a pas prévu d'implémenter une telle solution.

Le but de la présente invention est de proposer un procédé de sélection d'un élément d'une interface utilisateur et un dispositif mettant en oeuvre un tel procédé permettant de pallier au moins un des inconvénients de l'état de l'art rappelés ici :
- le fait que la taille des éléments à pointer peut être plus petite que la surface de contact du doigt sur l'écran ;
- le fait que lorsque l'on pose le doigt sur l'écran il vient masquer l'affichage et l'utilisateur ne peut pas contrôler visuellement ce qu'il fait ;
- le manque de précision dans le pointage d'éléments de petite taille ;
- le fait que lorsque que l'on fait un zoom global d'une page, l'utilisateur perd la vision d'ensemble de la page web, de l'application ou de l'interface utilisateur ;
- la difficulté de pointer sur les éléments d'interface situés au bord haut de l'écran lorsque la solution d'Apple^{®} pour l'iPhone^{®} est utilisée ;
- le fait que l'application a été conçue pour un PC et que l'on cherche à l'utiliser sur un appareil portable à écran tactile et de ce fait il n'existe pas une version à différentes échelles des icônes.

### Exposé de l'invention

On atteint au moins l'un des objectifs précités avec un procédé de sélection d'au moins un élément d'une interface utilisateur caractérisé en ce qu'il comprend les étapes suivantes :
- une étape au cours de laquelle une action d'un outil d'initialisation, positionné en une position d'initialisation sur l'interface utilisateur, déclenche un affichage d'une loupe virtuelle englobant la position d'initialisation; puis
- une étape au cours de laquelle une action d'un outil de validation déclenche un affichage dans la loupe d'un curseur centré sur la position d'initialisation ; puis
- une étape pendant laquelle tout déplacement de l'outil de validation provoque un déplacement identique pour le curseur et la loupe virtuelle sur l'interface et qui dépend du déplacement de l'outil de validation ; puis
- une étape pendant laquelle on sélectionne au moins un élément de l'interface lorsque l'outil de validation est relevé de l'interface ou qu'un outil de sélection est posé sur l'interface.

De préférence, l'interface utilisateur est un écran tactile.

De préférence, le déplacement du curseur et de la loupe virtuelle est un déplacement proportionnel à celui de l'outil de validation.

De préférence, l'élément à sélectionner est plus petit qu'une surface d'interaction de l'outil d'initialisation sur l'interface utilisateur.

L'action de l'outil d'initialisation déclenchant l'affichage de la loupe virtuelle sur l'interface utilisateur peut comprendre un positionnement de l'outil d'initialisation en la même position d'initialisation, pendant un temps supérieur à un seuil de temps.

L'action de l'outil d'initialisation déclenchant l'affichage de la loupe virtuelle sur l'interface utilisateur peut comprendre une séquence, ladite séquence comprenant :
- un positionnement de l'outil d'initialisation en une position d'initialisation, puis
- un relevé de l'outil d'initialisation, puis
- un nouveau positionnement de l'outil d'initialisation en la position d'initialisation ou en une position voisine,
cette séquence étant effectuée en une période de temps inférieure à un seuil d'intervalle de temps.

L'outil de validation peut être le même que l'outil d'initialisation. L'action déclenchant l'affichage du curseur, peut être un déplacement de l'outil d'initialisation sur l'interface d'utilisation en une position dont la distance à la position d'initialisation est supérieure à un seuil de distance.

On peut déterminer un facteur de zoom de la loupe en fonction d'une vitesse de déplacement de l'outil d'initialisation entre la position d'initialisation et sa position à la fin de l'action déclenchant l'affichage du curseur.

L'outil de validation peut être différent de l'outil d'initialisation. L'action déclenchant l'affichage du curseur peut comprendre l'action de poser l'outil de validation.

Pour sélectionner au moins un élément de l'interface, on peut générer une sélection spécifique selon une position relative d'appui de l'outil de sélection par rapport à l'outil de validation.

La sélection spécifique générée peut être un click gauche lorsque l'outil de sélection est à gauche de l'outil de validation.

La sélection spécifique générée peut être un click droit lorsque l'outil de sélection est à droite de l'outil de validation.

De préférence, un facteur d'agrandissement de la loupe virtuelle est strictement supérieur à 1.

Selon un autre aspect de l'invention, il est proposé un dispositif de sélection d'au moins un élément d'une interface utilisateur caractérisé en ce qu'il comprend :
- des moyens pour déclencher un affichage d'une loupe virtuelle englobant une position d'initialisation sur l'interface utilisateur, par une action d'un outil d'initialisation positionné en la position d'initialisation; et
- des moyens pour déclencher un affichage dans la loupe d'un curseur centré sur la position d'initialisation, par une action d'un outil de validation; et
- des moyens pour provoquer, pour tout déplacement de l'outil de validation, un déplacement identique pour le curseur et la loupe virtuelle sur l'interface, ledit déplacement dépendant du déplacement de l'outil de validation ; et
- des moyens pour sélectionner au moins un élément de l'interface lorsque l'outil de validation est relevé de l'interface ou qu'un outil de sélection est posé sur l'interface.

De préférence, l'interface utilisateur est un écran tactile.

De préférence, les moyens pour provoquer, pour tout déplacement de l'outil de validation, un déplacement identique pour le curseur et la loupe virtuelle sur l'interface, sont agencés pour que, le déplacement provoqué du curseur et de la loupe virtuelle soit un déplacement proportionnel à celui de l'outil de validation.

De préférence, l'élément à sélectionner est plus petit qu'une surface d'interaction de l'outil d'initialisation sur l'interface utilisateur.

L'action de l'outil d'initialisation pour déclencher l'affichage de la loupe virtuelle sur l'interface utilisateur peut comprendre un positionnement de l'outil d'initialisation en la même position d'initialisation, pendant un temps supérieur à un seuil de temps.

Les moyens pour déclencher l'affichage de la loupe virtuelle sur l'interface utilisateur peuvent être agencés pour :
- détecter un positionnement de l'outil d'initialisation en une position d'initialisation, et
- détecter un relevé de l'outil d'initialisation, et
- détecter un nouveau positionnement de l'outil d'initialisation en la position d'initialisation ou en une position voisine, et
- déclencher l'affichage de la loupe virtuelle si le positionnement, le relevé, et le nouveau positionnement sont détectés dans une période de temps inférieure à un seuil d'intervalle de temps,

L'outil de validation peut être le même que l'outil d'initialisation. L'action pour déclencher l'affichage du curseur, peut-être un déplacement de l'outil d'initialisation sur l'interface d'utilisation en une position dont la distance à la position d'initialisation est supérieure à un seuil de distance.

Le dispositif peut comprendre en outre des moyens pour déterminer un facteur de zoom de la loupe en fonction d'une vitesse de déplacement de l'outil d'initialisation entre la position d'initialisation et sa position à la fin de l'action pour déclencher l'affichage du curseur.

L'outil de validation peut être différent de l'outil d'initialisation. L'action mettant en oeuvre les moyens pour afficher le curseur peut comprendre l'action de poser l'outil de validation.

Les moyens pour sélectionner au moins un élément de l'interface peuvent être agencés pour générer une sélection spécifique selon une position relative d'appui de l'outil de sélection par rapport à l'outil de validation, par exemple pour reproduire un click gauche lorsque l'outil de sélection est à gauche de l'outil de validation ou pour reproduire un click droit lorsque l'outil de sélection est à droite de l'outil de validation.

De préférence, un facteur d'agrandissement de la loupe virtuelle est strictement supérieur à 1.

### Description des figures et modes de réalisation

D'autres avantages et particularités de l'invention apparaîtront à la lecture de la description détaillée de mises en oeuvre et d'un mode de réalisation nullement limitatif, et des dessins annexés suivants :
- les figures 1 à 3 illustrent, dans un procédé selon l'invention, une étape à la fin de laquelle un outil d'initialisation est posé en une position d'initialisation sur l'interface utilisateur et une étape au cours de laquelle on affiche sur l'interface une loupe virtuelle centrée sur la position d'initialisation ;
- les figures 4 à 6 illustrent, dans un procédé selon l'invention, une étape au cours de laquelle une action d'un outil de validation déclenche un affichage dans la loupe d'un curseur englobant la position d'initialisation ;
- les figures 7 à 9 illustrent, dans un procédé selon l'invention, une étape pendant laquelle tout déplacement de l'outil de validation provoque un déplacement pour le curseur qui est identique à celui de la loupe virtuelle sur l'interface ;
- la figure 10 illustre, dans un procédé selon l'invention, une étape pendant laquelle on sélectionne au moins un élément lorsque l'outil de validation est relevé de l'interface ;
- les figure 11 à 13 illustrent, dans un procédé selon l'invention, une étape pendant laquelle on sélectionne au moins un élément de l'interface lorsque qu'un outil de sélection, différent de l'outil de validation, est posé sur l'interface ;
- les figures 14 à 16 illustrent, dans un procédé selon l'invention, une des variantes de l'invention pour laquelle l'outil de validation est différent de l'outil d'initialisation et pour lequel l'action déclenchant l'affichage du curseur comprend l'action de poser l'outil de validation.

Dans la suite de cette description, on appelle écran tactile une interface utilisateur qui combine les fonctionnalités d'affichage d'un écran (moniteur) et celles d'un dispositif de pointage, par interaction physique avec cet écran.

Un écran tactile peut être mis en oeuvre par différentes technologies. De manière non limitative, ces technologies peuvent être la technologie résistive analogique, la technologie capacitive, la technologie à jauges de contrainte, la technologie résistive analogique-numérique, la technologie à infrarouge, la technologie à ondes de surface et/ou la technologie NFI (*Near Field Imaging*).

On appelle ici « outil » tout moyen physique apte à être en interaction (par exemple de pression et/ou capacitif) avec l'interface utilisateur en une position donnée de l'interface, l'outil étant dit positionné ou posé lorsqu'il interagit avec l'interface et est dit relevé dans le cas contraire. Par exemple, un doigt, un stylet ou un pointeur sont des outils utilisés avec les interfaces tactiles. Dans le cas de la technologie NFI, un outil (par exemple un doigt) peut ne pas être en contact direct avec l'interface et pour autant interagir avec celle-ci. Cette technologie permet de déterminer une position de l'outil sur l'interface tactile ainsi que la coordonnée d'altitude de l'outil (axe « z »). Selon l'invention, l'outil (le doigt) sera dit posé, mais pas nécessairement en contact, lorsqu'il est en interaction avec l'interface et relevé sinon.

On appelle loupe virtuelle un affichage agrandi d'un facteur donné d'une zone de l'interface utilisateur. Le facteur d'agrandissement est de préférence strictement supérieur à 1 ou peut aussi éventuellement être égal à 1.

On appelle élément tout objet affiché sur l'interface utilisateur. De manière non restrictive, un élément peut par exemple être une icône ou encore un lien d'un site internet.

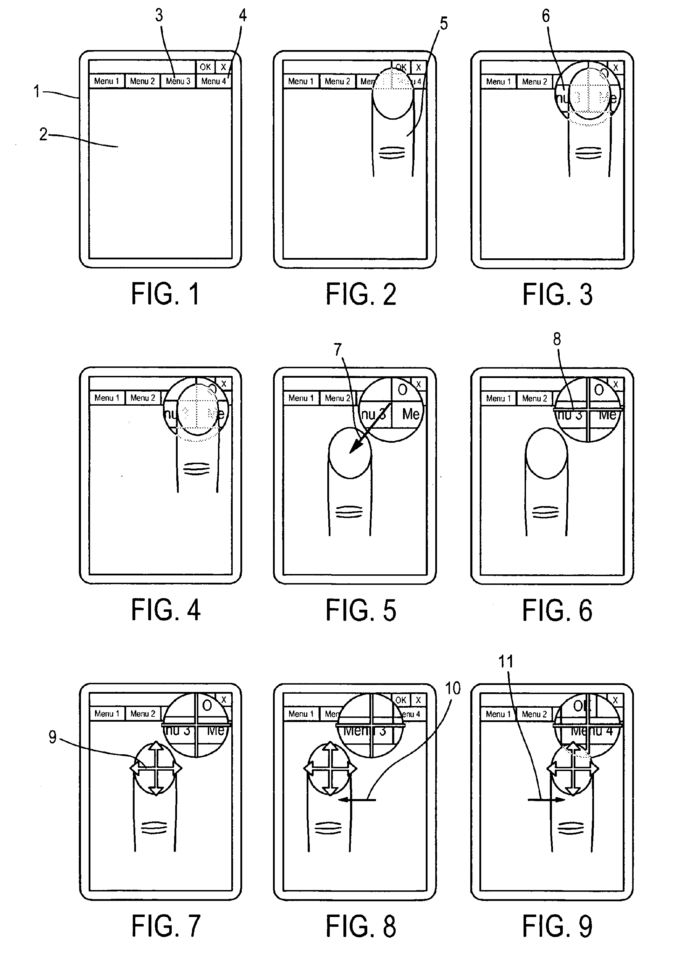

Une sélection d'au moins un élément permet d'activer une fonction liée à cet ou ces élément(s) De manière non restrictive, une fonction liée à une icône peut être une ouverture d'une application informatique, ou encore un affichage d'une page internet, etc. Une fonction liée à plusieurs éléments peut être une sélection de ceux-ci, par exemple dans le but de les déplacer sur une interface utilisateur. Une sélection peut aussi avoir pour effet au moins l'effet produit par un click droit ou gauche d'une souris traditionnelle. On va maintenant décrire en référence aux figures 1 à 10 un premier mode de réalisation d'un procédé selon l'invention de sélection d'au moins un élément mis en oeuvre sur une interface utilisateur.

En référence aux figures 1 à 3, on décrit une étape au cours de laquelle une action d'un outil d'initialisation, positionné en une position d'initialisation sur l'interface utilisateur, déclenche un affichage d'une loupe virtuelle englobant la position d'initialisation.

Sur la figure 1, on voit un dispositif 1, comprenant une interface utilisateur 2, qui est ici un écran tactile. Le dispositif 1 comprend en outre une unité électronique. Sur l'interface utilisateur 2 sont affichés au moins deux éléments 3 et 4. L'interface utilisateur peut par exemple mettre en oeuvre une technologie capacitive. Dans les systèmes capacitifs, une couche qui accumule les charges est placée sur la plaque de verre du moniteur. Lorsqu'un utilisateur touche la plaque avec son doigt, certaines de ces charges lui sont transférées.

Sur la figure 2, tous les éléments de la figure 1 sont représentés. De plus, un outil d'initialisation 5 qui est ici un doigt est posé sur l'interface utilisateur 2. L'outil d'initialisation aurait également pu être un stylet. L'action d'initialisation de cet outil consiste dans ce premier mode à laisser l'outil d'initialisation en la même position d'initialisation, pendant un temps supérieur à un seuil de temps. Typiquement, le seuil de temps est sensiblement égal à 1 seconde. Ce seuil de temps est mémorisé par l'unité électronique.

Sur la figure 3, tous les éléments de la figure 2 sont représentés. De plus, l'outil d'initialisation 5, positionné en une position d'initialisation sur l'interface utilisateur, déclenche l'affichage d'une loupe virtuelle 6 englobant la position d'initialisation. Le facteur de la loupe peut être de 1. Il est de préférence strictement supérieur à 1, comme illustré sur la figure 3. Le facteur de zoom peut dépendre de la pression exercée par le doigt d'initialisation. Au lieu d'une durée d'appui du doigt d'initialisation, on peut envisager que la loupe soit affichée lorsque la pression du doigt d'initialisation est supérieure à un certain seuil de pression (lui aussi mémorisé par l'unité électronique), dans le cas d'une tablette résistive. Autrement dit, les figures 1 à 3 illustrent le fait que lorsqu'un outil d'initialisation est posé sur l'interface utilisateur en une position d'initialisation et reste posé sur la position d'initialisation pendant un temps plus long qu'un certain seuil (également mémorisé par l'unité électronique), une loupe virtuelle apparait. Cette étape peut être vue comme une étape d'initialisation du procédé.

En référence aux figures 4 à 6, on décrit maintenant une étape au cours de laquelle une action d'un outil de validation déclenche un affichage dans la loupe d'un curseur englobant la position d'initialisation.

La figure 4 comprend tous les éléments de la figure 3. Dans ce premier mode, l'outil de validation est le doigt d'initialisation. La figure 5 comprend tous les éléments de la figure 4. De plus, on observe que l'outil d'initialisation 5 se déplace sur l'interface utilisateur 2 selon un vecteur 7.

La figure 6 comprend tous les éléments de la figure 1. De plus, l'outil de validation est posé sur l'interface. Dans ce premier mode l'outil de validation est le même que l'outil d'initialisation. De plus, la loupe virtuelle est affichée. En outre, on observe sur la figure 6 l'apparition d'un curseur 8 au centre de la loupe 6.

Ici, l'action déclenchant l'affichage du curseur 8, est un déplacement, à une vitesse de déplacement moyenne, de l'outil d'initialisation sur l'interface d'utilisation en une position dont la distance à la position d'initialisation est supérieure à un seuil de distance. Typiquement le seuil de distance est sensiblement égal au minimum d'un centimètre et de 1/20 de la diagonale de l'interface utilisateur. Ce seuil de distance est mémorisé par l'unité électronique.

Le facteur de zoom de la loupe peut dépendre de différents paramètres dont la distance du doigt de validation en fin d'étape par rapport à la position d'initialisation. Par exemple, le facteur de zoom peut augmenter lorsque cette vitesse de déplacement augmente.

Autrement dit, les figures 4 à 6 illustrent le fait que lorsque l'outil d'initialisation, est déplacé après affichage de la loupe et est plus loin de la position d'initialisation qu'un seuil défini mémorisé par l'unité électronique, un curseur est affiché sur l'interface utilisateur, au centre de la loupe 6. Cette étape peut être vue comme une étape permettant de valider la volonté de l'utilisateur de poursuivre le procédé et s'achève par l'apparition d'un curseur au centre de la loupe. Le curseur va permettre de cibler l'élément à sélectionner.

En référence aux figures 7 à 9, on va maintenant décrire une étape pendant laquelle tout déplacement de l'outil de validation provoque un déplacement identique pour le curseur et la loupe virtuelle sur l'interface.

La figure 7 comprend tous les éléments de la figure 6, c'est à dire le dispositif 1, un outil de validation qui est ici le même que l'outil d'initialisation ainsi que la loupe 6 et le curseur 8. De plus, une croix 9 est représentée sur l'outil de validation. Cette croix illustre ici la possibilité pour l'outil de validation de se déplacer sur l'interface utilisateur 2. Ce faisant, l'utilisateur déplace la loupe et le curseur.

La figure 8 comprend tous les éléments de la figure 7. De plus un déplacement, vers la gauche, de l'outil de validation est représenté par la flèche 10. Ici, la figure 8 montre que les déplacements de la loupe et du curseur, engendrés par la translation de la position de l'outil de validation sur l'écran sont proportionnels au déplacement de l'outil de validation. Ici, les déplacements identiques de la loupe et du curseur sont plus fins dans la loupe virtuelle, tout en suivant le déplacement de l'outil de validation. Le facteur de proportionnalité peut être négatif, c'est le cas lorsque les déplacements de la loupe et du curseur sont opposés au déplacement de l'outil de validation. Il peut également être égal à 1.

Le facteur de zoom de la loupe peut également dépendre de différents paramètres dont la pression exercée par l'outil de validation.

La figure 9 comprend tous les éléments de la figure 7. De plus un déplacement, vers la droite, de l'outil de validation est représenté par la flèche 11. Ici, les déplacements de la loupe 6 et du curseur 8 sont aussi identiques entre eux. On remarque que lorsque la loupe est déjà au bord de l'écran, par conséquent, c'est l'image dans la loupe qui se déplace (ici, vers la gauche) en même temps, proportionnellement au déplacement de l'outil de validation en interaction avec l'interface utilisateur. Le déplacement du curseur et de la loupe virtuelle est nul et seul un affichage zoomé dans la loupe est déplacé proportionnellement à l'outil de validation.

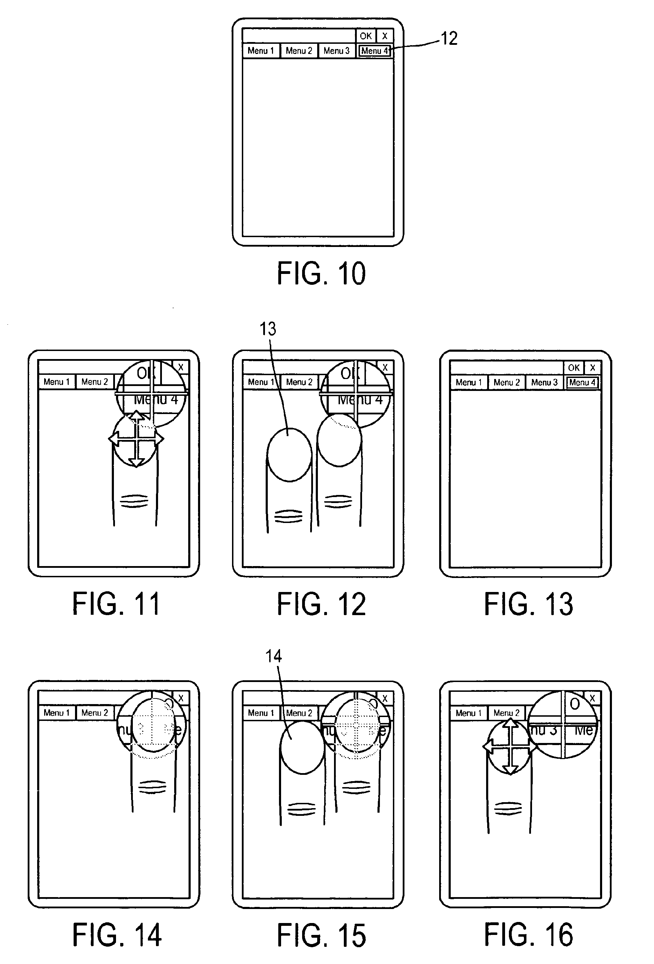

En référence à la figure 10, on va maintenant décrire une étape durant laquelle on sélectionne au moins un élément lorsque l'outil de validation est relevé de l'interface.

La figure 10 contient tous les éléments de la figure 1. Sur la figure 10, l'outil de validation utilisé à l'étape précédente de validation, cf. figure 7, a été levé et l'élément 4 a été sélectionné comme le montre le rectangle l'encadrant 12. On voit que l'élément qui est sélectionné, ici l'élément 5, est plus petit qu'une surface d'interaction de l'outil de validation avec l'interface utilisateur. Typiquement, l'aire de la surface de contact d'un doigt est de l'ordre de 1/2 cm². Le doigt peut donc avoir une surface de contact plus grande que celle de l'élément à sélectionner.

On va maintenant décrire une première variante du mode de réalisation de l'invention venant d'être décrit en référence aux figures 11 à 13, uniquement pour les différences de cette variante par rapport à la précédente description. Dans cette variante, les figures 11 à 1 viendront en remplacement de la figure 10.

La figure 11 illustre la fin d'une étape au cours de laquelle tout déplacement de l'outil de validation provoque un déplacement identique pour le curseur et la loupe virtuelle sur l'interface et qui dépend du déplacement de l'outil de validation. Elle contient tous les éléments présents dans la figure 7.

Dans cette première variante, on décrit une étape pendant laquelle on sélectionne au moins un élément de l'interface lorsque qu'un outil de sélection, différent de l'outil de validation, est posé sur l'interface.

La figure 12 contient tous les éléments de la figure 10. De plus, l'outil de sélection 13, différent de l'outil de validation, est posé sur l'interface. Cet outil de validation peut par exemple être un autre doigt de l'utilisateur ou un stylet.

Autrement dit, on sélectionne l'élément 4 en posant un autre outil, dit de sélection, plutôt qu'en relevant l'outil de validation. Bien sur, l'outil de validation peut ensuite être relevé. Bien sur, l'outil de sélection peut ensuite être relevé.

Par ailleurs, on peut générer une sélection spécifique selon une position relative d'appui de l'outil de sélection par rapport à l'outil de validation. La sélection spécifique générée peut être un click gauche lorsque l'outil de sélection est à gauche de l'outil de validation et/ou un click droit lorsque l'outil de sélection est à droite de l'outil de validation. La droite et la gauche sont définies par rapport au sens de lecture de l'interface utilisateur.

On va maintenant décrire une seconde variante, éventuellement combinable avec la première variante, en référence aux figures 2 à 3, uniquement pour les différences de cette variante par rapport à la précédente description. Dans cette seconde variante, l'action de l'outil d'initialisation déclenchant l'affichage de la loupe virtuelle sur l'interface utilisateur comprend une séquence. Cette séquence comprend un positionnement de l'outil d'initialisation en une position d'initialisation (figure 2), puis un relevé de l'outil d'initialisation (non illustré), puis un nouveau positionnement de l'outil d'initialisation en la position d'initialisation (tel qu'illustré sur la figure 2) ou en une position voisine, c'est-à-dire pas plus éloigné de la position d'initialisation qu'un certain seuil d'éloignement, mémorisé par l'unité électronique, typiquement égal à 5 mm de la position d'initialisation du premier positionnement de l'outil d'initialisation cette séquence étant effectuée en une période de temps inférieure à un seuil d'intervalle de temps. Typiquement, le seuil d'intervalle de temps est sensiblement égal à 500 millisecondes. Ce seuil de temps est mémorisé par l'unité électronique. L'utilisateur peut alors poursuivre le procédé de sélection par une étape au cours de laquelle une action d'un outil de validation déclenche un affichage dans la loupe d'un curseur centré sur la position d'initialisation (figure 3).

Autrement dit, le procédé est initialisé par une séquence comprenant les étapes de poser l'outil d'initialisation, comme sur la figure 2, en une position d'initialisation ; puis de le relever, puis de le reposer comme sur la figure 2 non loin de sa position d'initialisation. Cette séquence est réalisée rapidement et déclenche l'affichage de la loupe 6, comme l'illustre la figure 3.

On va maintenant décrire une troisième variante, éventuellement combinable avec la première variante et/ou la seconde variante, en référence aux figures 14 à 16, uniquement pour les différences de cette variante par rapport à la précédente description. Dans cette variante, les figures 14 à 16 remplacent les figures 4 à 6.

La figure 14 est la même que la figure 3, illustrant la fin d'une étape au cours de laquelle une action d'un outil d'initialisation, positionné en une position d'initialisation sur l'interface utilisateur, déclenche un affichage d'une loupe virtuelle englobant la position d'initialisation

Cette troisième variante est mise en oeuvre à la suite de l'étape qui vient d'être rappelée.

Dans cette troisième variante, l'action d'un outil de validation qui déclenche un affichage dans la loupe d'un curseur centré sur la position d'initialisation comprend l'action de poser un outil de validation 14 qui est différent de l'outil d'initialisation comme illustré sur la figure 15. Cet outil de validation peut par exemple être un autre doigt de l'utilisateur ou encore un stylet. On voit sur la figure 15 que le curseur 8 est affiché. Cette action peut être suivie de la relevée de l'outil d'initialisation, comme illustré sur la figure 16. L'utilisateur peut alors poursuivre le procédé de sélection en mettant en oeuvre une étape pendant laquelle tout déplacement de l'outil de validation provoque un déplacement pour le curseur et la loupe virtuelle sur l'interface et qui dépend du déplacement de l'outil de validation.

Autrement dit, au lieu de déplacer l'outil d'initialisation comme cela a été décrit auparavant, l'utilisateur peut poser un autre de outil de validation puis relever l'outil d'initialisation pour afficher le curseur 8, comme le montre les figures 15 et 16.

Dans son premier mode de réalisation et ses différentes variantes, on remarque que la position initiale de la loupe et du curseur est la même que la position d'initialisation. Le curseur et la loupe apparaissent donc sur la position d'initialisation originalement ciblée par l'utilisateur (voir figure 3) mais il est ensuite possible de pallier à cet inconvénient (voir figure 8). Par ailleurs, il n'est pas utilisé de zoom global sur une partie de l'interface utilisateur. C'est à dire que la partie zoomée n'occupe pas toute la surface de l'écran de l'interface, ce qui gênerait l'utilisateur car il perdrait la vision de l'ensemble de la page. Enfin, on peut remarquer que l'invention est générique car elle ne présuppose par l'existence d'éléments à différentes échelles.

L'unité de traitement comprend des moyens pour recevoir des données en provenance de l'écran, les traiter et envoyer des données traitées à l'écran, tels qu'au moins un microprocesseur, une carte électronique analogique ou numérique et/ou une carte mère.

Dans ce mode de réalisation et ses différentes variantes, c'est l'unité de traitement qui analyse toute interaction d'un outil avec l'écran tactile et déclenche en fonction de cette interaction toute modification sur l'écran tactile. Sans être limitatif, l'affichage, l'ouverture d'un programme sont des fonctions mises en oeuvre grâce à ce moyen de traitement électronique et/ou logiciel.

C'est à dire que c'est l'unité de traitement qui est, selon la variante considérée, agencée pour :
- déclencher un affichage d'une loupe virtuelle englobant une position d'initialisation sur l'interface utilisateur, par une action d'un outil d'initialisation positionné en la position d'initialisation;
- déclencher un affichage dans la loupe d'un curseur centré sur la position d'initialisation, par une action d'un outil de validation;
- provoquer, pour tout déplacement de l'outil de validation, un déplacement identique pour le curseur et la loupe virtuelle sur l'interface, ledit déplacement dépendant du déplacement de l'outil de validation ;
- sélectionner au moins un élément de l'interface lorsque l'outil de validation est relevé de l'interface ou qu'un outil de sélection est posé sur l'interface ;
- détecter un positionnement de l'outil d'initialisation en une position d'initialisation ;
- détecter un relevé de l'outil d'initialisation ;
- détecter un nouveau positionnement de l'outil d'initialisation en la position d'initialisation ou en une position voisine ;
- déclencher l'affichage de la loupe virtuelle si le positionnement, le relevé, et le nouveau positionnement sont détectés dans une période de temps inférieure à un seuil d'intervalle de temps ;
- peut comprendre en outre des moyens pour déterminer un facteur de zoom de la loupe en fonction d'une vitesse de déplacement de l'outil d'initialisation entre la position d'initialisation et sa position à la fin de l'action pour déclencher l'affichage du curseur.

L'unité de traitement peut mettre en oeuvre des systèmes d'exploitations connus tels que iOS, Windows Mobile ou encore Android. De nombreux outils de programmations dédiés à ces systèmes d'exploitation permettent de mettre en oeuvre ce mode de réalisation et ses différentes variantes. En particulier, il est possible d'installer un pilote logiciel du système d'exploitation qui va intercepter les évènements « touché d'écran» et les analyser pour déterminer si les conditions requises par l'invention sont satisfaites. Tant que ces évènements ne satisfont pas aux conditions de déclenchement d'un comportement particulier lié à l'invention, ces évènements sont transmis au système d'exploitation. Lorsqu'une condition particulière est détectée (par exemple touché long), le pilote va exécuter un code particulier selon le cas pour faire apparaitre ou déplacer ou disparaitre une loupe ou un curseur. Le pilote peut également générer de nouveaux évènements en réponse aux conditions détectées, par exemple « click ». Ces évènements sont transmis au système d'exploitation de façon à déclencher l'action requise par l'invention. En ce qui concerne la fonction loupe elle-même, elle peut être réalisée en lisant dans la mémoire vidéo les pixels entourant le centre de la loupe. L'image formée par ces pixels est mise à l'échelle pour être affichée en surimpression (overlay) sur l'écran.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de sélection d'au moins un élément (4) d'une interface utilisateur (2) **caractérisé en ce qu'**il comprend les étapes suivantes :
- une étape au cours de laquelle une action d'un outil d'initialisation (5), positionné en une position d'initialisation sur l'interface utilisateur (3), déclenche un affichage d'une loupe virtuelle (6) englobant la position d'initialisation; puis
- une étape au cours de laquelle une action d'un outil de validation (6 ou 14) déclenche un affichage dans la loupe (6) d'un curseur (8) centré sur la position d'initialisation ; puis
- une étape pendant laquelle tout déplacement (9) de l'outil de validation (6 ;14) provoque un déplacement identique (10-11) pour le curseur (8) et la loupe virtuelle (6) sur l'interface (3) et qui dépend du déplacement de l'outil de validation (6 ; 14) ; puis
- une étape pendant laquelle on sélectionne au moins un élément (12) de l'interface (2) lorsque l'outil de validation (6 ; 14) est relevé de l'interface (2) ou qu'un outil de sélection (13) est posé sur l'interface.

2. Procédé selon la revendication 1, **caractérisé en ce que** l'interface utilisateur est un écran tactile.

3. Procédé selon les revendication 1 ou 2, **caractérisé en ce que** le déplacement du curseur et de la loupe virtuelle est un déplacement proportionnel à celui de l'outil de validation.

4. Procédé selon les revendications précédentes, **caractérisé en ce que** l'élément à sélectionner est plus petit qu'une surface d'interaction de l'outil d'initialisation sur l'interface utilisateur.

5. Procédé selon l'une quelconque des revendications précédentes, **caractérisé en ce que** l'action de l'outil d'initialisation déclenchant l'affichage de la loupe virtuelle sur l'interface utilisateur comprend un positionnement de l'outil d'initialisation en la même position d'initialisation, pendant un temps supérieur à un seuil de temps.

6. Procédé selon l'une quelconque des revendications précédentes, **caractérisé en ce que** l'action de l'outil d'initialisation déclenchant l'affichage de la loupe virtuelle sur l'interface utilisateur comprend une sequence, ladite séquence comprenant :
- un positionnement de l'outil d'initialisation en une position d'initialisation, puis
- un relevé de l'outil d'initialisation, puis
- un nouveau positionnement de l'outil d'initialisation en la position d'initialisation ou en une position voisine, cette séquence étant effectuée en une période de temps inférieure à un seuil d'intervalle de temps.

7. Procédé selon l'une quelconque des revendications précédentes, **caractérisé en ce que** l'outil de validation est le même que l'outil d'initialisation et pour lequel l'action déclenchant l'affichage du curseur, est un déplacement de l'outil d'initialisation sur l'interface d'utilisation en une position dont la distance à la position d'initialisation est supérieure à un seuil de distance.

8. Procédé selon la revendication 7, **caractérisé en ce qu'**on détermine un facteur de zoom de la loupe en fonction d'une vitesse de déplacement de l'outil d'initialisation entre la position d'initialisation et sa position à la fin de l'action déclenchant l'affichage du curseur.

9. Procédé selon l'une quelconque des revendications 1 à 6, **caractérisé en ce que** l'outil de validation est différent de l'outil d'initialisation et pour lequel l'action déclenchant l'affichage du curseur comprend l'action de poser l'outil de validation.

10. Procédé selon l'une quelconque des revendications précédentes, **caractérisé en ce que** pour sélectionner au moins un élément de l'interface, on génère une sélection spécifique selon une position relative d'appui de l'outil de sélection par rapport à l'outil de validation.

11. Procédé selon la revendication 10, **caractérisé en ce que** la sélection spécifique générée est un click gauche lorsque l'outil de sélection est à gauche de l'outil de validation.

12. Procédé selon l'une quelconque des revendications 10 à 11, **caractérisé en ce que** la sélection spécifique générée est un click droit lorsque l'outil de sélection est à droite de l'outil de validation.

13. Procédé selon l'une quelconque des revendications précédentes, **caractérisé en ce qu'**un facteur d'agrandissement de la loupe virtuelle est strictement supérieur à 1.

14. Dispositif de sélection d'au moins un élément d'une interface utilisateur **caractérisé en ce qu'**il comprend :
- des moyens pour déclencher un affichage d'une loupe virtuelle englobant une position d'initialisation sur l'interface utilisateur, par une action d'un outil d'initialisation positionné en la position d'initialisation; et
- des moyens pour déclencher un affichage dans la loupe d'un curseur centré sur la position d'initialisation, par une action d'un outil de validation; et
- des moyens pour provoquer, pour tout déplacement de l'outil de validation, un déplacement identique pour le curseur et la loupe virtuelle sur l'interface, ledit déplacement dépendant du déplacement de l'outil de validation ; et
- des moyens pour sélectionner au moins un élément de l'interface lorsque l'outil de validation est relevé de l'interface ou qu'un outil de sélection est posé sur l'interface.

## Patentansprüche

1. Verfahren zur Auswahl wenigstens eines Elements (4) einer Benutzerschnittstelle (2), **dadurch gekennzeichnet, dass** es die folgenden Schritte umfasst:
- einen Schritt, im Laufe dessen eine Aktion eines Initialisierungswerkzeugs (5), das an einer Initialisierungsposition auf der Benutzerschnittstelle (2) positioniert ist, eine Anzeige einer die Initialisierungsposition einschließenden virtuellen Lupe (6) auslöst, anschließend
- einen Schritt, im Laufe dessen eine Aktion eines Validierungswerkzeugs (6 oder 14) eine Anzeige eines auf der Initialisierungsposition zentrierten Cursors (8) in der Lupe (6) auslöst, dann
- einen Schritt, während dessen jede Bewegung (9) des Validierungswerkzeugs (6; 14) eine identische Bewegung (10-11) für den Cursor (8) und die virtuelle Lupe (6) auf der Schnittstelle (2) bewirkt, welche von der Bewegung des Validierungswerkzeugs (6; 14) abhängt, anschließend
- einen Schritt, während dessen wenigstens ein Element (12) der Schnittstelle (2) ausgewählt wird, wenn das Validierungswerkzeug (6; 14) von der Schnittstelle (2) abgehoben wird oder wenn ein Auswahlwerkzeug (13) auf die Schnittstelle aufgesetzt wird.

2. Verfahren nach Anspruch 1, **dadurch gekennzeichnet, dass** die Benutzerschnittstelle ein Touchscreen ist.

3. Verfahren nach den Ansprüchen 1 oder 2, **dadurch gekennzeichnet, dass** die Bewegung des Cursors und der virtuellen Lupe eine zu derjenigen des Validierungswerkzeugs proportionale Bewegung ist.

4. Verfahren nach einem der vorhergehenden Ansprüche, **dadurch gekennzeichnet, dass** das auszuwählende Element kleiner als eine Interaktionsfläche des Initialisierungswerkzeugs auf der Benutzerschnittstelle ist.

5. Verfahren nach einem der vorhergehenden Ansprüche, **dadurch gekennzeichnet, dass** die Aktion des Initialisierungswerkzeugs, welche die Anzeige der virtuellen Lupe auf der Benutzerschnittstelle auslöst, ein Positionieren des Initialisierungswerkzeugs an der gleichen Initialisierungsposition über eine Zeitdauer oberhalb einer Zeitschwelle umfasst.

6. Verfahren nach einem der vorhergehenden Ansprüche, **dadurch gekennzeichnet, dass** die Aktion des Initialisierungswerkzeugs, welche die Anzeige der virtuellen Lupe auf der Benutzerschnittstelle auslöst, eine Folge umfasst, wobei die Folge umfasst:
- ein Positionieren des Initialisierungswerkzeugs an einer Initialisierungsposition, dann
- ein Abheben des Initialisierungswerkzeugs, anschließend
- ein erneutes Positionieren des Initialisierungswerkzeugs an der Initialisierungsposition oder an einer benachbarten Position, wobei diese Folge in einem Zeitraum unterhalb einer Zeitintervallschwelle vollzogen wird.

7. Verfahren nach einem der vorhergehenden Ansprüche, **dadurch gekennzeichnet, dass** das Validierungswerkzeug das gleiche wie das Initialisierungswerkzeug ist und bei dem die die Anzeige des Cursors auslösende Aktion eine Bewegung des Initialisierungswerkzeugs auf der Benutzerschnittstelle an eine Position ist, deren Abstand zu der Initialisierungsposition oberhalb einer Abstandsschwelle liegt.

8. Verfahren nach Anspruch 7, **dadurch gekennzeichnet, dass** ein Zoom-Faktor der Lupe in Abhängigkeit einer Bewegungsgeschwindigkeit des Initialisierungswerkzeugs zwischen der Initialisierungsposition und seiner Position am Ende der die Anzeige des Cursors anzeigenden Aktion festgelegt wird.

9. Verfahren nach einem der Ansprüche 1 bis 6, **dadurch gekennzeichnet, dass** das Validierungswerkzeug von dem Initialisierungswerkzeug verschieden ist und bei dem die die Anzeige des Cursors auslösende Aktion die Aktion des Aufsetzens des Validierungswerkzeugs umfasst.

10. Verfahren nach einem der vorhergehenden Ansprüche, **dadurch gekennzeichnet, dass** zur Auswahl wenigstens eines Elements der Schnittstelle eine spezifische Auswahl entsprechend einer relativen Anlageposition des Auswahlwerkzeugs gegenüber dem Validierungswerkzeug generiert wird.

11. Verfahren nach Anspruch 10, **dadurch gekennzeichnet, dass** die generierte spezifische Auswahl ein Linksklick ist, wenn das Auswahlwerkzeug sich links des Validierungswerkzeugs befindet.

12. Verfahren nach einem der Ansprüche 10 bis 11, **dadurch gekennzeichnet, dass** die generierte spezifische Auswahl ein Rechtsklick ist, wenn das Auswahlwerkzeug sich rechts des Validierungswerkzeugs befindet.

13. Verfahren nach einem der vorhergehenden Ansprüche, **dadurch gekennzeichnet, dass** ein Vergrößerungsfaktor der virtuellen Lupe streng größer als 1 ist.

14. Vorrichtung zur Auswahl wenigstens eines Elements einer Benutzerschnittstelle, **dadurch gekennzeichnet, dass** sie umfasst:
- Mittel zum Auslösen einer Anzeige einer eine Initialisierungsposition auf der Benutzerschnittstelle einschließenden virtuellen Lupe durch eine Aktion eines an der Initialisierungsposition positionierten Initialisierungswerkzeugs und
- Mittel zum Auslösen einer Anzeige eines auf der Initialisierungsposition zentrierten Cursors in der Lupe durch eine Aktion eines Validierungswerkzeugs und
- Mittel, um für jede Bewegung des Validierungswerkzeugs eine identische Bewegung für den Cursor und die virtuelle Lupe auf der Schnittstelle zu bewirken, wobei die Bewegung von der Bewegung des Validierungswerkzeugs abhängt, sowie
- Mittel zum Auswählen wenigstens eines Elements der Schnittstelle, wenn das Validierungswerkzeug von der Schnittstelle abgehoben wird oder wenn ein Auswahlwerkzeug auf die Schnittstelle aufgesetzt wird.

## Claims

1. A method for selecting at least one element (4) of a user interface (2) **characterised in that** it comprises the following steps:
- a step during which an action of an initialisation tool (5), positioned into an initialisation position on the user interface (2), triggers a display of a virtual magnifier (6) encompassing the initialisation position; and then
- a step during which an action of a validation tool (6 or 14) triggers a display in the magnifier (6) of a cursor (8) centred on the initialisation position; and then
- a step during which any movement (9) of the validation tool (6; 14) causes an identical movement (10-11) of the cursor (8) and the virtual magnifier (6) on the interface (2) and which depends on the movement of the validation tool (6; 14); and then
- a step during which at least one element (12) of the interface (2) is selected when the validation tool (6; 14) is picked up from the interface (2) or when a selection tool (13) is put onto the interface.

2. The method according to claim 1, **characterised in that** the user interface is a touch screen.

3. The method according to claims 1 or 2, **characterised in that** the movement of the cursor and of the virtual magnifier is a proportional movement to that of the validation tool.

4. The method according to any of the preceding claims, **characterised in that** the element to be selected is smaller than an interaction surface of the initialisation tool on the user interface.

5. The method according to any of the preceding claims, **characterised in that** the action of the initialisation tool triggering the display of the virtual magnifier on the user interface comprises positioning the initialisation tool into the same initialisation position, during a time higher than a time threshold.

6. The method according to any of the preceding claims, **characterised in that** the action of the initialisation tool triggering the display of the virtual magnifier on the user interface comprises a sequence, said sequence comprising:
- positioning the initialisation tool into an initialisation position, and then
- picking up the initialisation tool, and then
- newly positioning the initialisation tool into the initialisation position or in a neighbouring position, this sequence being performed in a time period lower than a time interval threshold.

7. The method according to any of the preceding claims, **characterised in that** the validation tool is the same that the initialisation tool and for which the action triggering the display of the cursor is a movement of the initialisation tool on the user interface to a position the distance of which to the initialisation position is higher than a distance threshold.

8. The method according to claim 7, **characterised in that** a zooming factor of the magnifier is determined as a function of a movement speed of the initialisation tool between the initialisation position and its position at the end of the action triggering the display of the cursor.

9. The method according to any of claims 1 to 6, **characterised in that** the validation tool is different from the initialisation tool and for which the action triggering the display of the cursor comprises the action of putting the validation tool.

10. The method according to any of the preceding claims, **characterised in that** to select at least one element of the interface, a specific selection is generated depending on a relative pressing position of the selection tool with respect to the validation tool.

11. The method according to claim 10, **characterised in that** the generated specific selection is a left click when the selection tool is on the left of the validation tool.

12. The method according to any of claims 10 to 11, **characterised in that** the generated specific selection is a right click when the selection tool is on the right of the validation tool.

13. The method according to any of the preceding claims, **characterised in that** a magnifying factor of the virtual magnifier is strictly higher than 1.

14. A device for selecting at least one element of a user interface **characterised in that** it comprises:
- means for triggering a display of a virtual magnifier encompassing an initialisation position on the user interface, by an action of an initialisation tool positioned into the initialisation position;
- means for triggering the display in the magnifier of a cursor centred on the initialisation position by an action of a validation tool; and
- means for causing, for any movement of the validation tool, an identical movement of the cursor and the virtual magnifier on the interface, said movement being dependent on the movement of the validation tool; and
- means for selecting at least one element of the interface when the validation tool is picked up from the interface or that a selection tool is put onto the interface.
